# EUROPEAN PATENT APPLICATION

(11) **EP 4 496 078 A1**
(43) Date of publication of application: **22.01.2025**
(21) Application number: 23898337.3
(22) Date of filing: 30.11.2023
(51) Int. Cl.: H01M 10/653, H01M 50/211, H01M 50/271, H01M 50/289, H01M 10/647, H01M 10/613

(54) **BATTERY PACK MANUFACTURING METHOD, AND BATTERY PACK MANUFACTURED USING METHOD**

(30) Priority: 02.12.2022 KR 20220166529
(71) Applicant: LG Energy Solution, Ltd., Seoul 07335 (KR)
(72) Inventor: HUR, Nam Hoon, Daejeon 34122 (KR); YANG, Chang Hyeon, Daejeon 34122 (KR); SHIN, Ju Hwan, Daejeon 34122 (KR); LEE, Hyoung Suk, Daejeon 34122 (KR)
(74) Representative: Plasseraud IP
(86) International application number: PCT/KR2023/019557
(87) International publication number: WO 2024/117813

(57) **Abstract**

Disclosed herein relates to a manufacturing method of a battery pack and to a battery pack manufactured by the method and housing a plurality of battery modules including a cell stack in which battery cells are stacked, characterized in that the battery pack includes: a pack case including a module area in which the battery modules are seated; and an upper cover coupled to the pack case to cover an upper part of the battery module, wherein an upper adhesive layer including a thermally conductive adhesive is formed between the battery module housed in the pack case and the upper cover.

## Description

### [Technical Field]

The present invention relates to a manufacturing method of a battery pack, and to a battery pack manufactured by the method, characterized in that the battery pack of the present invention forms an adhesive layer including a thermally conductive adhesive between a battery module housed therein and an upper cover to improve the stability of the battery module.

This application claims the benefit of priority from Korean Patent Application No. 10-2022-0166529, filed on Dec. 2, 2022, the disclosure of which is incorporated herein by reference in its entirety.

### [Background Technology of the Invention]

The types of secondary batteries that are currently widely used include lithium-ion batteries, lithium polymer batteries, nickel-cadmium batteries, nickel-hydrogen batteries, and nickel-zinc batteries. The operating voltage of these unit secondary batteries, i.e., the unit battery cell, is about 2.5 V to 4.5 V. Therefore, if a higher output voltage is required, a plurality of battery cells may be connected in series to form a battery pack. Also, depending on the charge/discharge capacity required for the battery pack, a plurality of battery cells may be connected in parallel to form a battery pack. Accordingly, the number of battery cells included in the battery pack may be varied depending on the required output voltage or charge/discharge capacity.

Meanwhile, when a plurality of battery cells is connected in series/parallel to form a battery pack, it is common to first construct a battery module including at least one battery cell, and then add other components using the at least one battery module to form a battery pack.

Conventional battery modules typically include at least one cell stack including battery cells and a box-like housing structure made of metal, such as a module frame, that houses the at least one cell stack. In such a conventional battery module structure, the energy density of the entire battery pack is reduced due to the weight or volume of the module frame itself, increasing the weight of the entire battery pack.

The above problems have led to prior art attempts to exclude module frame configurations that enclose and protect a cell stack, and to store and dispose the cell stack in a battery pack only in a configuration that couples a busbar frame and an end plate at the front and rear surfaces of the cell stack, respectively, where electrode leads are formed.

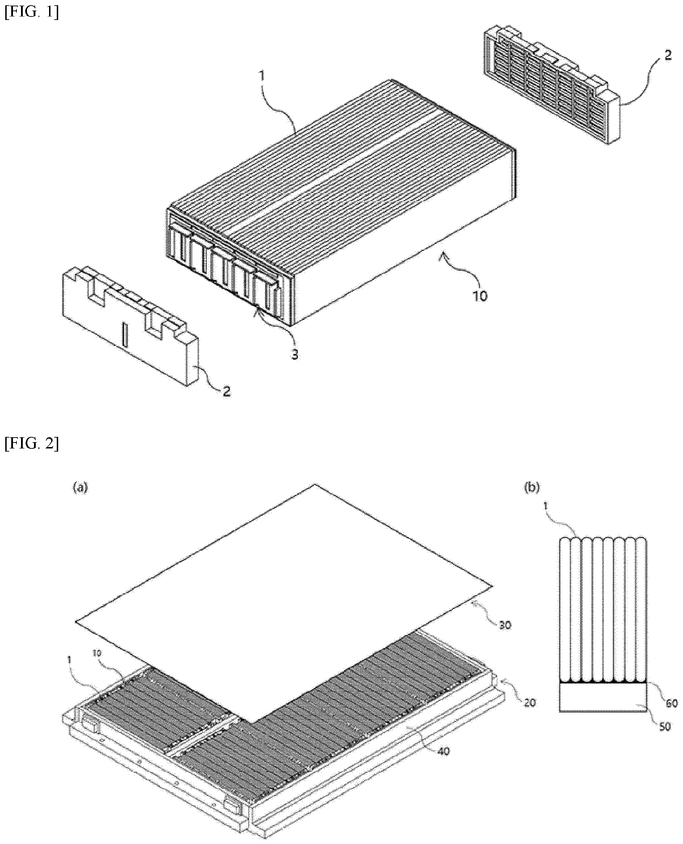

FIG. 1 is a perspective view of a battery module, excluding the module frame, and including a cell stack 10, a busbar frame 3, and an end plate 2.

Since the battery module of FIG. 1 excludes the module frame that encloses and protects the cell stack 10, each battery cell 1 included in the cell stack 10 cannot be properly fixed. Therefore, when the battery module is mounted in a battery pack, it is necessary to first fix the cell stack 10 that is exposed to the outside.

FIG. 2 illustrates a battery pack with the module frame of FIG. 1 mounted, wherein a plurality of battery modules is mounted in a pack case 20, as shown in FIG. 2(a). The pack case 20 surrounds the sides of each mounted battery module with side walls 40 and covers the upper part of the battery module with an upper cover 30 to protect it from the outside. FIG. 2(b) shows a partial cross-sectional view of the pack case 20 of FIG. 2(a) and a battery module mounted in the pack case 20. The lower part of the battery module is supported by a base plate 50 corresponding to the bottom of the pack case 20, wherein a resin 60 may be interposed between the battery module and the base plate 50 to prevent the cell stack 10 contained in the battery module from wobbling. The resin 60 serves to fix each battery cell 1 of the cell stack 10 included in the battery module to the base plate 50. Furthermore, the resin 60 may also have thermal conductivity properties, so that it can transfer the high temperature heat generated by the cell stack 10 to the base plate 50, thereby discharging the heat to the outside.

### (Prior art reference)

### Korean Public Patent No. 10-2021-0041950

### [Description of the Invention]

### [Technical Problem]

Accordingly, the present invention was conceived to solve the above problems, and aims to provide a manufacturing method of a battery pack capable of effectively fixing a battery module therein from which a module frame is excluded, and a battery pack manufactured by the method.

In addition, an object of the present invention to provide a manufacturing method of a battery pack capable of more efficiently discharging heat from a battery module to the outside, and a battery pack manufactured by the method.

Other objects and advantages of the present invention will be understood from the following description, and will become more apparent from the embodiments of the present invention. It will also be readily apparent that the objects and advantages of the present invention may be implemented by the means and combinations thereof disclosed in the patent claims.

### [Technical Solution]

According to the present invention, the present invention provides a manufacturing method of a battery pack, including: seating a battery module into each module area within a pack case; coupling an upper cover to the pack case to cover an upper part of the battery module; and injecting a thermally conductive adhesive into an upper surface of a battery module housed in the pack case, wherein any one among the upper cover and pack case includes an injection hole, and the thermally conductive adhesive is injected into an upper part of the battery module through the injection hole to form an upper adhesive layer.

The thermally conductive adhesive may be injected through the injection hole into a space between the upper cover and the battery module.

Prior to the step of coupling the upper cover, seating a block pad on the upper part of each battery module seated in the module area may be further included.

The block pad is shaped like a window frame with an open center part, and may be seated as it covers along an upper border of the battery module.

After the step of injecting the thermally conductive adhesive, sealing the injection hole after the injecting the thermally conductive adhesive may be further included.

According to the present invention, the present invention provides a battery pack manufactured by the above-mentioned method and housing a plurality of battery modules including a cell stack in which battery cells are stacked, including: a pack case including a module area where a battery module is seated; and an upper cover coupled to the pack case to cover an upper part of the battery module, wherein an upper adhesive layer including a thermally conductive adhesive is formed between the battery module housed in the pack case and the upper cover.

Any one among the upper cover and pack case may include a plurality of injection holes corresponding to each of the module areas.

The pack case includes: a base plate; a side wall coupled along the border of the base plate; and a plurality of separation walls compartmentalizing the space inside the base plate, wherein the separation wall may compartmentalize the space inside the pack case to form a plurality of module areas.

The injection hole may be formed in the upper cover corresponding to each of the module areas.

The upper cover may further include a discharge hole for discharging air inside the battery pack to the outside, corresponding to each of the module areas.

The injection hole may be formed in the side wall corresponding to each of the module areas.

The upper cover may further include a discharge hole for discharging air inside the battery pack to the outside, corresponding to each of the module areas.

A block pad in the shape of a window frame with an open center part may be further interposed between the battery module housed in each of the module areas and the upper cover, wherein the upper adhesive layer may only be formed in the opening of the block pad.

The block pad may seal between the upper cover and the battery module to prevent the upper adhesive layer from leaking outwardly.

### [Advantageous Effects]

According to the present invention, the stability of the battery pack can be improved by effectively fixing the battery module with the module frame excluded inside the battery pack.

In addition, according to the present invention, the thermal stability of the battery pack may be improved by effectively discharging heat generated by the internally mounted battery modules to the outside.

### [Brief Description of the Drawings]

FIG. 1 illustrates a conventional battery module.
FIG. 2 illustrates a battery pack with the battery module of FIG. 1 mounted.
FIG. 3 is a step-by-step flowchart of the battery pack manufacturing process of the present invention.
FIG. 4 illustrates a pack case and an upper cover included in the battery pack of the present invention.
FIG. 5 illustrates the pack case and upper cover of FIG. 4 coupled.
FIG. 6 is a partial cross-sectional view of the process of injecting a thermally conductive adhesive into the battery pack of FIG. 5.
FIG. 7 illustrates a battery pack according to a first embodiment of the present invention.
FIG. 8 is a partial cross-sectional view of the battery pack of FIG. 7.
FIG. 9 illustrates a portion of a battery pack according to a second embodiment of the present invention.
FIG. 10 illustrates the process of injecting a thermally conductive adhesive into the battery pack of FIG. 9.
FIG. 11 illustrates a portion of a battery pack according to a third embodiment of the present invention.
FIG. 12 illustrates a pack case included in a battery pack according to a fourth embodiment of the present invention.
FIG. 13 illustrates a thermally conductive adhesive applied to a battery module housed in the pack case of FIG. 12.
FIG. 14 illustrates a battery pack according to a fifth embodiment of the present invention.
FIG. 15 illustrates a battery pack according to a sixth embodiment of the present invention.

### [Best Mode for Carrying out the Invention]

Hereinafter, the preferred embodiments of the present invention will be described in detail with reference to the attached drawings. Prior to this, the terms and words used in this specification and claims should not be construed in a limited or merely dictionary sense, but should be interpreted according to the meaning and concept consistent with the technical spirit of the present invention, based on the principle that the inventor is entitled to define terms in a way that best describes his invention.

Therefore, it should be understood that the embodiments described in this specification and the configurations illustrated in the drawings are merely the most preferred embodiments of the present invention and do not represent all the technical spirit of the present invention, so it should be understood that various equivalents and modifications that could substitute for these embodiments may exist at the time of filing this application.

Furthermore, in describing the present invention, specific descriptions of relevant disclosed configurations or features are omitted where it is believed that such detailed description would obscure the essence of the present invention.

Since the embodiments of the present invention are provided to more fully illustrate the present invention to those of ordinary skill in the art, the shapes and sizes of the components in the drawings may be exaggerated, omitted, or shown schematically for clarity. Accordingly, the size or proportions of each component are not necessarily indicative of its actual size or proportions.

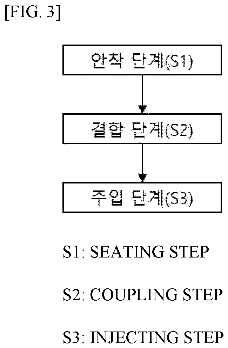

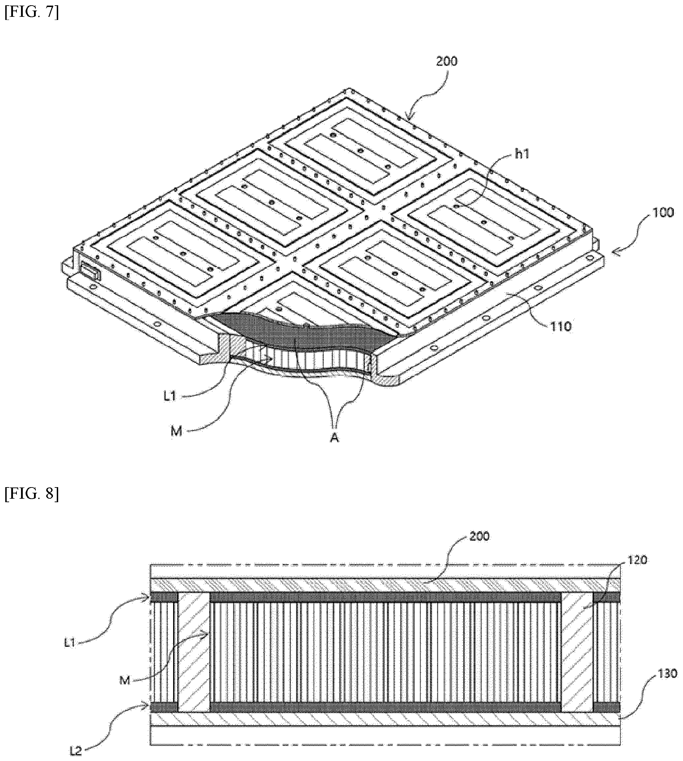

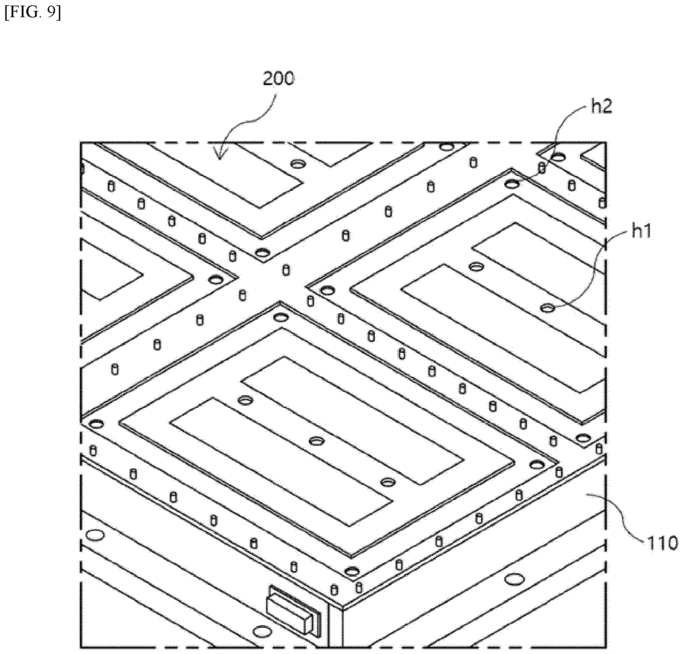

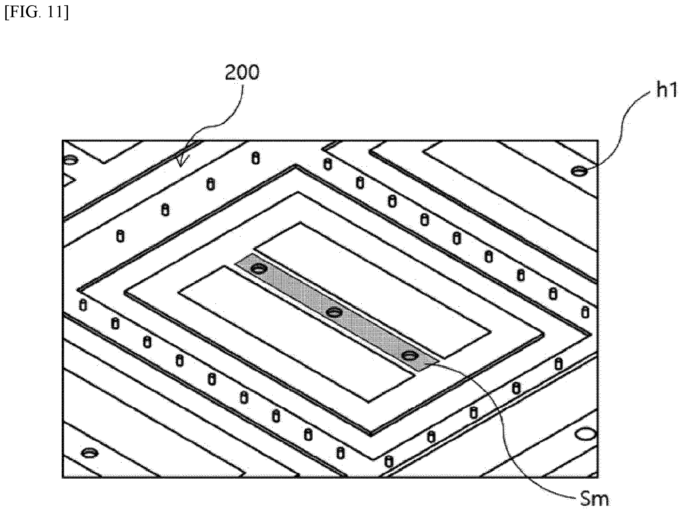

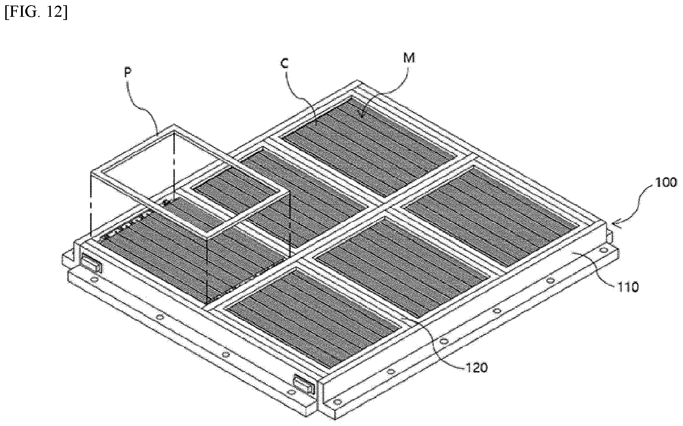

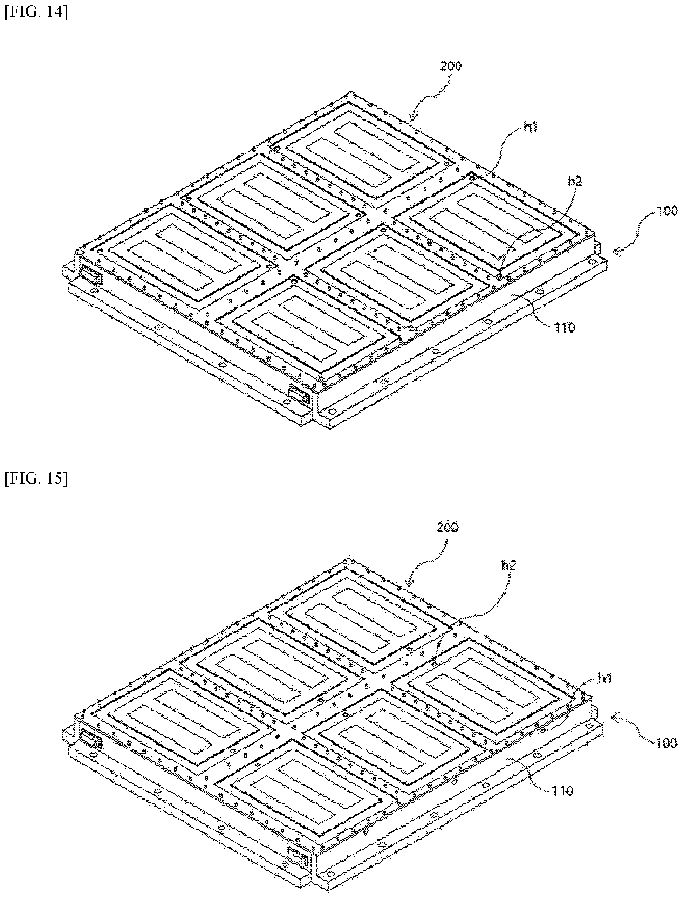

The present invention relates to a manufacturing method of a battery pack and to a battery pack manufactured by the method, characterized in that the battery pack of the present invention has improved stability of the battery module M by forming an upper adhesive layer L1 including a thermally conductive adhesive A between the battery module M housed therein and the upper cover 200. FIGS. 3 to 6 relate to a battery pack manufacturing method of the present invention, FIGS. 7 to 8 relate to a battery pack according to a first embodiment of the present invention, FIGS. 9 to 10 relate to a battery pack according to a second embodiment of the present invention, FIG. 11 illustrate a battery pack according to a third embodiment of the present invention, FIGS. 12 to 13 relate to a battery pack according to a fourth embodiment of the present invention, FIG. 14 relates to a battery pack according to a fifth embodiment of the present invention, and FIG. 15 relates to a battery pack according to a sixth embodiment of the present invention.

Hereinafter, the manufacturing process of the battery pack of the present invention will be described step by step with reference to the flowchart of FIG. 3, and each embodiment of the battery pack of the present invention will be described with reference to FIGS. 7 through 15.

### Manufacturing method of a battery pack

FIG. 3 is a flowchart illustrating each step of the battery pack manufacturing process of the present invention.

Hereinafter, each step will be explained using the flowchart as a reference.

### Seating step S1

The seating step is a step of seating the battery modules M into their respective module areas within the pack case 100.

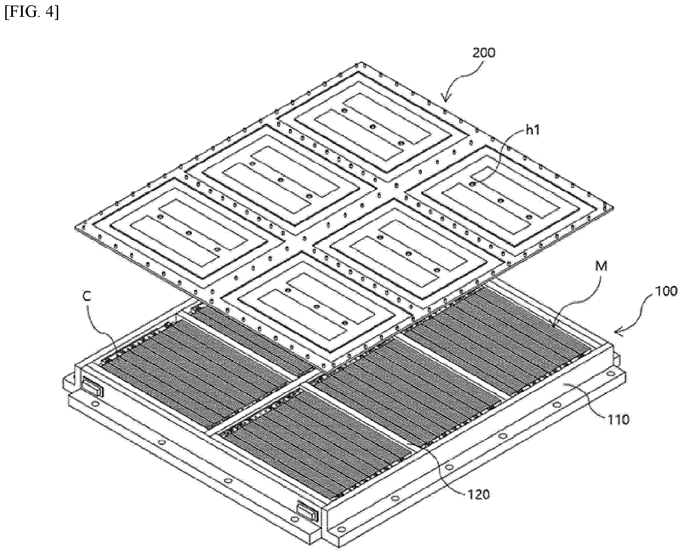

FIG. 4 illustrates a pack case 100 and an upper cover 200 included in a battery pack of the present invention.

The battery module M of the present invention has a module frame excluded, such as the battery module M shown in FIG. 1, and includes a cell stack S on which the battery cells C are stacked.

The battery module M of the above-mentioned shape is seated within the pack case 100 as shown in FIG. 4.

The pack case 100 includes a base plate 130, a side wall 110 coupled along a border of the base plate 130, and a plurality of separation walls 120 that compartmentalize the space inside the base plate 130.

The separation wall 120 compartmentalizes the space inside the pack case 100 to form a plurality of module areas, and each battery module M is seated in the module area one by one. At this time, the base plate 130 may support a lower part of the respective battery module M.

Within each module area on the base plate 130, a sticky adhesive may be applied to form a lower adhesive layer L2. Accordingly, the battery module M that is seated in the module area can be fixed with the base plate 130 by coupling with the adhesive of the lower adhesive layer L2. In this case, the adhesive directly couples with each of the battery cells C included in the cell stack S of the battery module M.

The adhesive may include, more specifically, a thermally conductive adhesive A.

The thermally conductive adhesive A may be coupled in close contact with each battery cell C included in the cell stack S of the battery module M to transfer heat from the battery cell C to the base plate 130 for discharge.

Each battery module M seated in the pack case 100 may remain separated from each other by the separation wall 120.

### Coupling step S2

The coupling step is a step of coupling an upper cover 200 to the pack case 100 to cover the upper part of the battery module M.

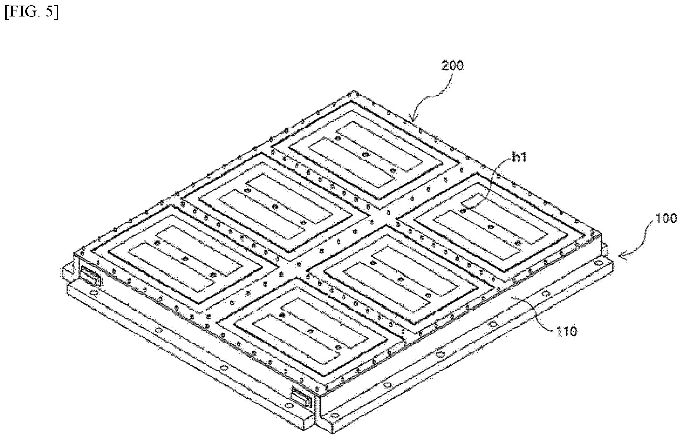

FIG. 5 illustrates the pack case 100 of FIG. 4 coupled to the upper cover 200.

The battery pack includes a pack case 100 protecting the side and lower parts of the battery module M, and an upper cover 200 protecting the upper part of the battery module M.

The battery pack manufacturing method of the present invention may further include the step of seating a block pad P on the upper part of each battery module M seated in the module area, prior to the coupling step S2.

The block pad P is shaped like a window frame with an open center part, and may be seated by covering along the upper border of the battery module M.

Regarding the block pad P, the battery pack according to a fourth embodiment will be described later with reference to the drawings.

### Injecting step S3

The injecting step is a step of injecting the thermally conductive adhesive A into the upper part of the battery module M housed in the pack case 100.

The battery pack of the present invention is characterized in that it includes an injection hole h1 in one among the upper cover 200 and the pack case 100.

Referring to FIG. 5, a plurality of injection holes h1 are formed in the upper cover 200.

The thermally conductive adhesive A is a thermally conductive cooling adhesive, which may be provided with a thermal resin.

The thermally conductive adhesive A may be injected into the module area inside the battery pack through the injection hole h1.

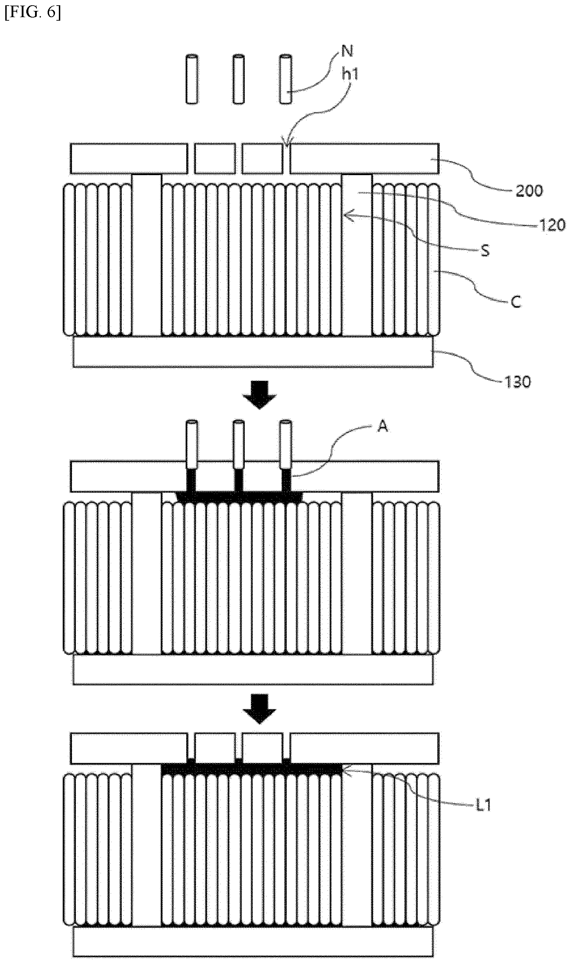

FIG. 6 is a partial cross-sectional view of the process of injecting a thermally conductive adhesive A into the battery pack of FIG. 5.

The thermally conductive adhesive A is housed in a separate storage tank or the like and is discharged through a separate nozzle N in communication with the storage tank.

According to FIG. 6, the injection holes h1 of the present invention are formed in the upper cover 200 position corresponding to the module area between the separation walls 120. The nozzles N are simultaneously inserted into the injection holes h1 corresponding to the number of the injection holes h1 and discharge thermally conductive adhesive A into the injection holes h1 to inject the thermally conductive adhesive A into the space between the upper cover 200 and the battery module M. The thermally conductive adhesive A filling the space between the upper cover 200 and the battery module M forms an upper adhesive layer L1 to fix the cell stack S of the battery module M to the upper cover 200.

The battery pack manufacturing method of the present invention may further include the step of injecting a thermally conductive adhesive A, followed by the step of sealing the injection hole h1.

The sealing is carried out to prevent the thermally conductive adhesive A from escaping again through the injection hole h1.

The sealing may be carried out by pasting a sealing member in the form of a tape onto the injection hole h1, the sealing member preferably being watertight. This is to prevent the sealing member pasted on the upper cover 200 in which the injection hole h1 is located from being weakened in adhesion by the thermally conductive adhesive A.

### Battery pack

### (First embodiment)

FIG. 7 illustrates a battery pack according to a first embodiment of the present invention. More specifically, FIG. 7 is a perspective view of the battery pack with some incisions made to reveal the internal configuration, and FIG. 8 is a cross-sectional view of a portion of the battery pack of FIG. 7.

A battery pack according to a first embodiment of the present invention includes a pack case 100 including a module area in which a battery module M is seated, and an upper cover 200 that is coupled with the pack case 100 to cover the upper part of the battery module M.

The pack case 100 includes a base plate 130, a side wall 110 coupled along a border of the base plate 130, and a plurality of separation walls 120 compartmentalizing a space inside the base plate 130, the separation walls 120 compartmentalizing a space inside the pack case 100 to form a plurality of module areas. In this case, the module areas generally have a rectangular shape following the shape of the battery module M.

The battery pack of the present invention according to FIG. 7 has an injection hole h1 formed on the upper cover 200.

The upper cover 200 includes a plurality of injection holes h1 corresponding to each module area. Preferably, each of the module area may be associated with at least one injection hole h1.

The battery pack of the present invention according to FIG. 7 is formed with an upper adhesive layer L1 including a thermally conductive adhesive A between the battery module M housed in the pack case 100 and the upper cover 200.

Referring to FIG. 8, a lower adhesive layer L2 is formed on the lower part of the battery module M seated in the module area to fix the battery module M to the base plate 130, and an upper adhesive layer L1 is formed on the upper part of the battery module M to fix the battery module M to the upper cover 200. Thus, the battery module M can be stably fixed inside the battery pack due to the upper adhesive layer L1 and the lower adhesive layer L2 including the thermally conductive adhesive A attached from the upper part to the lower part. Furthermore, the battery module M can safely withstand external shaking and impact due to the upper adhesive layer L1. Furthermore, even if the battery module M is heated and generates high temperature heat, the heat can be transferred to the base plate 130 through the lower adhesive layer L2 and released to the outside, and the heat can be transferred to the upper cover 200 through the upper adhesive layer L1 and released to the outside. In other words, the battery module M can be prevented from being severely deteriorated by more effectively dissipating internal heat.

### (Second embodiment)

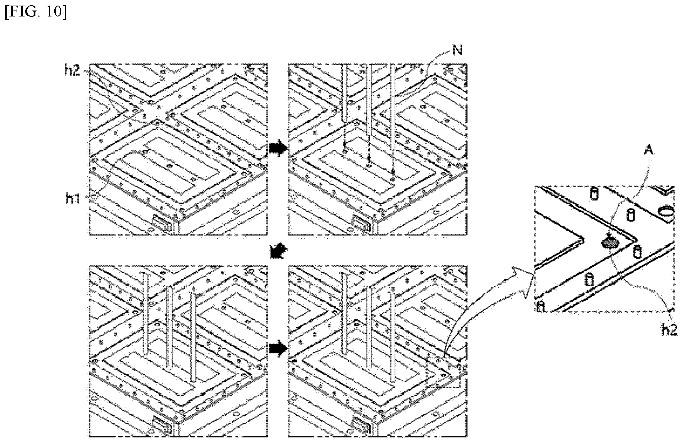

FIG. 9 illustrates a portion of a battery pack according to a second embodiment of the present invention, and FIG. 10 illustrates the process of injecting a thermally conductive adhesive A into the battery pack of FIG. 9.

The upper cover 200 included in the battery pack of the present invention may further include discharge holes h2 that are opened to allow air inside the battery pack to be discharged to the outside, corresponding to each module area.

The discharge hole h2 should be formed at a certain distance apart from the injection hole h1, as shown in FIG. 9, in order to prevent the thermally conductive adhesive A injected through the injection hole h1 from escaping through the discharge hole h2 before forming the adhesive layer. For example, if the injection hole h1 is formed at a position of the upper cover 200 corresponding to a center part of the module area, the discharge hole h2 may be formed at a position of the upper cover 200 corresponding to an edge part of the module area. Or, conversely, if the injection hole h1 is formed at a position of the upper cover 200 corresponding to an edge part of the module area, the discharge hole h2 may be formed at a position of the upper cover 200 corresponding to a center part of the module area.

The discharge hole h2 serves as a passageway for the air inside to escape so that the thermally conductive adhesive A can be injected smoothly through the injection hole h1, and also serves to confirm that the thermally conductive adhesive A has been injected to fill the space between the battery module M and the upper cover 200. When the thermally conductive adhesive A is injected into the injection hole h1 through the nozzle N, it is difficult to know when to stop the injection because the internal situation is unknown, and thus a problem of overflow of the thermally conductive adhesive A through the injection hole h1 again may occur.

However, when the discharge hole h2 is formed, it is possible to visually check whether the thermally conductive adhesive A is fully injected into the interior through the discharge hole h2 as shown in FIG. 10.

### (Third embodiment)

The battery pack of the present invention may further include a sealing material Sm for sealing the injection hole h1.

FIG. 11 illustrates a portion of a battery pack according to a third embodiment of the present invention.

The battery pack of the present invention can be sealed by attaching a sealing material Sm to the injection hole h1 when the injection of the thermally conductive adhesive A is completed.

Preferably, the sealing material Sm is watertight. This is to prevent the adhesion of the sealing material Sm to the thermally conductive adhesive A from being weakened.

The sealing material Sm may also be used to seal the discharge hole h2 when the discharge hole h2 is formed in the upper cover 200.

### (Fourth embodiment)

The battery pack of the present invention may further include a block pad P between the battery module M housed in each module area and the upper cover 200.

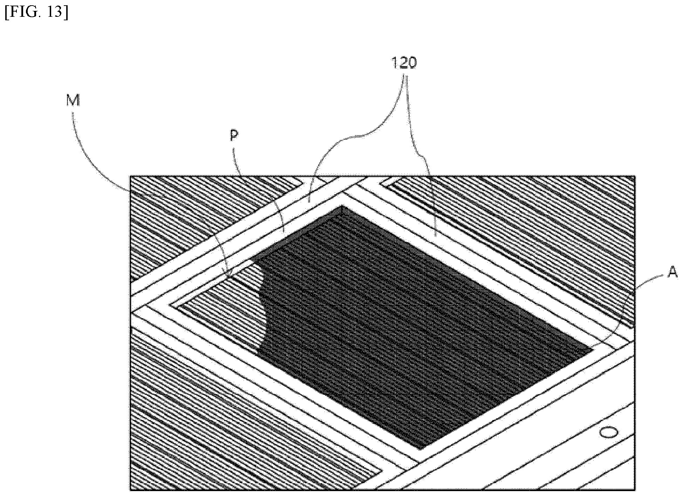

FIG. 12 illustrates a pack case 100 included in a battery pack according to a fourth embodiment of the present invention, and FIG. 13 illustrates a thermally conductive adhesive A applied to a battery module M housed in the pack case 100 of FIG. 12.

As shown in FIG. 12, a block pad P in the shape of a window frame with an open center part is attached to the battery module M housed in each module area. Specifically, the block pad P is interposed between the battery module M and the upper cover 200 when the pack case 100 and the upper cover 200 are coupled, and seals between the upper cover 200 and the battery module M.

The block pad P has a shape in which the center part is open. Thus, when a thermally conductive adhesive A is injected onto the battery module M equipped with the block pad P to form an upper adhesive layer L1, the adhesive layer is formed only at the opening of the block pad P, as shown in FIG. 13. In other words, the block pad P serves to seal between the upper cover 200 and the battery module M, preventing the adhesive layer from leaking into the leads or busbars of each battery cell C included in the cell stack S of the battery module M.

### (Fifth embodiment)

The injection hole h1 and the discharge hole h2 of the present invention are not particularly limited in their formation position, provided that the condition that they are located on the upper cover 200 corresponding to the module area can be satisfied.

FIG. 14 illustrates a battery pack according to a fifth embodiment of the present invention.

As shown in FIG. 14, the injection hole h1 and the discharge hole h2 are formed in diagonal positions on one of the module areas.

### (Sixth embodiment)

The battery pack of the present invention includes a plurality of injection holes h1 corresponding to each module area in either of the upper cover 200 and the pack case 100. That is, the battery pack of the present invention may have injection holes h1 formed in the upper cover 200 as well as in the pack case 100.

FIG. 15 illustrates a battery pack according to a sixth embodiment of the present invention.

The injection holes h1 are formed in the side wall 110 corresponding to each of the module area. In this case, the plurality of injection holes h1 is formed to be spaced apart at a predetermined distance along the side wall 110.

The upper cover 200 may further include a discharge hole h2 corresponding to each of the module areas, as shown in FIG. 15, through which air inside the battery pack is discharged to the outside.

The present invention has been described in more detail above with reference to the drawings and embodiments. However, it is to be understood that the configurations shown in the drawings or embodiments described herein are only one embodiment of the invention and do not represent all of the technical ideas of the present invention, and that there may be various equivalents and modifications that may replace them at the time of filing the present disclosure.

### (Reference numerals)

1: (CONVENTIONAL ART) BATTERY CELL
2: (CONVENTIONAL ART) END PLATE
3: (CONVENTIONAL ART) BUSBAR FRAME
10: (CONVENTIONAL ART) CELL STACK
20: (CONVENTIONAL ART) PACK CASE
30: (PRIOR ART) UPPER COVER
40: (CONVENTIONAL ART) SIDE WALL
50: (CONVENTIONAL ART) BASE PLATE
60: (CONVENTIONAL ART) RESIN
100: PACK CASE
110: SIDE WALL
120: SEPARATION WALL
130: BASE PLATE
200: UPPER COVER
A: THERMALLY CONDUCTIVE ADHESIVE
C: BATTERY CELL
h1: INJECTION HOLE
h2: DISCHARGE HOLE
L 1: UPPER ADHESIVE LAYER
L2: LOWER ADHESIVE LAYER
M: BATTERY MODULE
N: NOZZLE
P: BLOCK PAD
S: CELL STACK
Sm: SEALING MATERIAL

## Claims

1. A manufacturing method of a battery pack comprising:
seating a battery module into each module area within a pack case;
coupling an upper cover to the pack case to cover an upper part of the battery module; and
injecting a thermally conductive adhesive into an upper surface of a battery module housed in the pack case, wherein
any one among the upper cover and pack case includes an injection hole, and
the thermally conductive adhesive is injected into an upper part of the battery module through the injection hole to form an upper adhesive layer.

2. The manufacturing method of a battery pack of claim 1, wherein
the thermally conductive adhesive is injected through the injection hole into a space between the upper cover and the battery module.

3. The manufacturing method of a battery pack of claim 1, further comprising:
prior to the step of coupling the upper cover, seating a block pad on the upper part of each battery module seated in the module area.

4. The manufacturing method of a battery pack of claim 3, wherein
the block pad is shaped like a window frame with an open center part, and is seated as it covers along an upper border of the battery module.

5. The manufacturing method of a battery pack of claim 1, further comprising:
sealing the injection hole after the injecting the thermally conductive adhesive.

6. A battery pack manufactured by the method of any one of claims 1 to 5, housing a plurality of battery modules including a cell stack in which battery cells are stacked, comprising:
a pack case including a module area where a battery module is seated; and
an upper cover coupled to the pack case to cover an upper part of the battery module, wherein
an upper adhesive layer including a thermally conductive adhesive is formed between the battery module housed in the pack case and the upper cover.

7. The battery pack of claim 6, wherein
any one among the upper cover and pack case includes a plurality of injection holes corresponding to each of the module areas.

8. The battery pack of claim 6, wherein
the pack case comprises:
a base plate;
a side wall coupled along the border of the base plate; and
a plurality of separation walls compartmentalizing the space inside the base plate, wherein
the separation wall compartmentalizes the space inside the pack case to form a plurality of module areas.

9. The battery pack of claim 8, wherein
the injection hole is formed in the upper cover corresponding to each of the module areas.

10. The battery pack of claim 9, wherein
the upper cover further includes a discharge hole for discharging air inside the battery pack to the outside, corresponding to each of the module areas.

11. The battery pack of claim 8, wherein
the injection hole is formed in the side wall corresponding to each of the module areas.

12. The battery pack of claim 11, wherein
the upper cover further includes a discharge hole for discharging air inside the battery pack to the outside, corresponding to each of the module areas.

13. The battery pack of claim 6, wherein
a block pad in the shape of a window frame with an open center part is further interposed between the battery module housed in each of the module areas and the upper cover, wherein
the upper adhesive layer is formed only in the opening of the block pad.

14. The battery pack of claim 13, wherein
the block pad seals between the upper cover and the battery module to prevent the upper adhesive layer from leaking outwardly.
